# EUROPÄISCHE PATENTSCHRIFT

(11) **EP 0 416 230 B1**
(45) Veröffentlichungstag und Bekanntmachung des Hinweises auf die Patenterteilung: **23.02.1994**
(21) Anmeldenummer: 90112321.6
(22) Anmeldetag: 28.06.1990
(51) Int. Cl.: B60J 7/10

(54) **Personenkraftwagen, insbesondere Sportwagen**
Motor car, particularly sports car
Automobile, en particulier voiture de sport

(30) Priorität: 05.09.1989 DE 3929831
(43) Veröffentlichungstag der Anmeldung: 13.03.1991
(73) Patentinhaber: Dr.Ing.h.c. F. Porsche Aktiengesellschaft, 70435 Stuttgart (DE)
(72) Erfinder: Schreiber, Reinhold, Dipl.-Ing., D-7533 Tiefenbronn (DE); Murkett, Stephen, D-7016 Gerlingen (DE)

(56) Entgegenhaltungen:
- DE-A- 1 755 619
- GB-A- 2 164 299
- US-A- 4 592 586

## Beschreibung

Die Erfindung bezieht sich auf einen Personenkraftwagen, insbesondere Sportwagen, mit einer strömungsgünstig ausgebildeten Karosserie gemäß dem Oberbegriff des Patentanspruches 1.

Aus der gattungsbildenden US-PS 45 92 586 geht ein Personenkraftwagen mit einer strömungsgünstig ausgebildeten Karosserie hervor, der entlang dem oberen Rand der Windschutzscheibe, der Türfensterscheiben und von dahinterliegenden Fondseitenfenster einen durchgehenden tragenden Rahmen aufweist, an dem ein Verdeck lösbar befestigt ist. Eine kuppelförmige Heckscheibe wird nicht von diesem tragenden Rahmen umfaßt, da der geschlossene Rahmen vor der Heckscheibe endet und über seitliche Säulen an die darunterliegende Aufbaustruktur angeschlossen ist.

Bei einem bekannten Personenkraftwagen (DE-A-17 55 619) ist zwischen einem Windschutzscheibenrahmen und einem den Fahrgastraum bogenförmig überspannenden Überrollbügel ein abnehmbares Verdeck vorgesehen, das über Spannverschlüsse am Windschutzscheibenrahmen und am Überrollbügel in Lage gehalten ist. Dieses Verdeck ist aus Kunststoff gefertigt und als sogenanntes Festdach ausgebildet. In Fahrtrichtung gesehen ist hinter dem Überrollbügel eine großflächige kuppelförmig ausgebildete Heck-scheibe angeordnet, die umlaufend mit einem Einfaßrahmen versehen ist.

Dieser Anordnung haftet der Nachteil an, daß die Ausbildung des Verdecks, der Spannverschlüsse, der Aufnahmen (Windschutzscheibenrahmen, Überrollbügel) und der Heckscheibe aufwendig und kostenintensiv ist. Ferner weisen das Verdeck, die Spannverschlüsse, die Aufnahmen und die Heckscheibe zusammen ein beträchtliches Gewicht auf.

Aufgabe der Erfindung ist es, an einem umwandelbaren Personenkraftwagen oberhalb der Gürtellinie solche Vorkehrungen zu treffen, daß die Karosserie und das Verdeck einen einfachen Aufbau aufweisen, kostengünstig herstellbar sind und eine Gewichtsreduzierung erzielt wird.

Erfindungsgemäß wird diese Aufgabe durch die kennzeichnenden Merkmale des Anspruchs 1 gelöst. Weitere, die Erfindung in vorteilhafter Weise ausgestaltende Merkmale sind in den Unteransprüchen enthalten.

Die mit der Erfindung hauptsächlich erzielten Vorteile sind darin zu sehen, daß durch die Anordnung eines durchgehenden tragenden Rahmens entlang dem oberen Rand der Windschutzscheibe, der Türfensterscheiben und der dahinterliegend angeordneten Fondseitenfenster eine einfache Aufnahme für das Verdeck und die Heckscheibe gebildet wird. Der kostenintensive Überrollbügel (hohe Werkzeugkosten) kann entfallen. Das durch zumindest eine innenliegende Schale und einen außenliegenden textilen Bezug gebildete Verdeck weist einen einfachen Aufbau und ein geringes Gewicht auf und ist mittels der Reißverschlüsse leicht und schnell am Rahmen befestigbar. Durch die Ausbildung der Heckscheibe aus PMMA wird zusätzliches Gewicht eingespart. Das Entfernen der herkömmlichen Läufer an den Reißverschlüssen stellt sicher, daß das Verdeck von unbefugten Personen nur mit erheblichen Aufwand geöffnet werden kann (Diebstahlsicherung).

Ein Ausführungsbeispiel der Erfindung ist in der Zeichnung dargestellt und wird im folgenden näher erläutert.

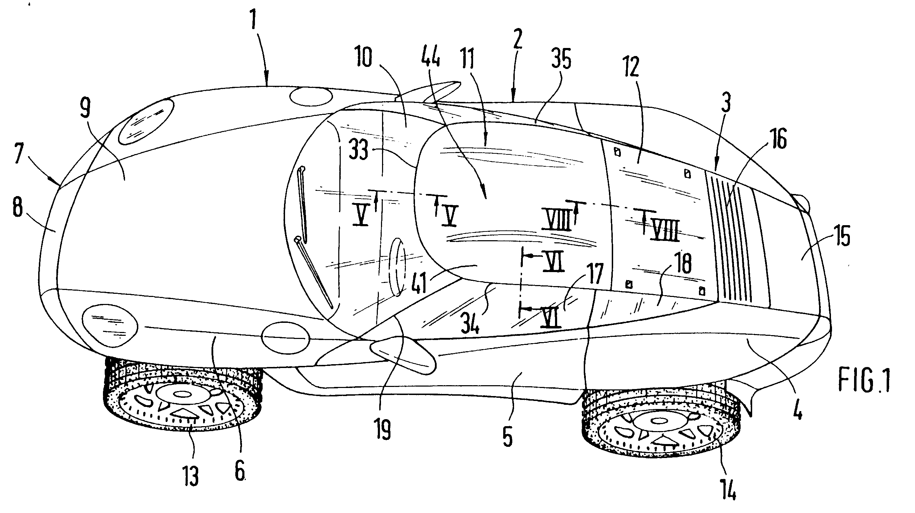

Es zeigt:
- Fig. 1: eine Schrägansicht von der Seite auf einen Personenwagen mit einem geschlossenen Verdeck ,
- Fig. 2: eine Ansicht entsprechend Fig. 1 auf den Personenwagen mit geöffnetem Verdeck,
- Fig. 3: eine Ansicht entsprechend Fig. 1 auf den Personenwagen mit geöffnetem Verdeck und abgenommener Heckscheibe,
- Fig. 4: eine Schrägansicht auf den oberhalb der Gürtellinie liegenden Bereich des Personenwagens in größerem Maßstab,
- Fig. 5: einen Schnitt nach der Linie V-V der Fig. 1 im größerem Maßstab,
- Fig. 6: einen Schnitt nach der Linie VI-VI der Fig. 1 im größerem Maßstab,
- Fig. 7: einen Schnitt nach der Linie VII-VII der Fig. 2 in größerem Maßstab,
- Fig. 8: einen Schnitt nach der Linie VIII-VIII der Fig. 1 in größerem Maßstab,
- Fig. 9: einen Schnitt nach der Linie IX-IX der Fig. 2 in größerem Maßstab,

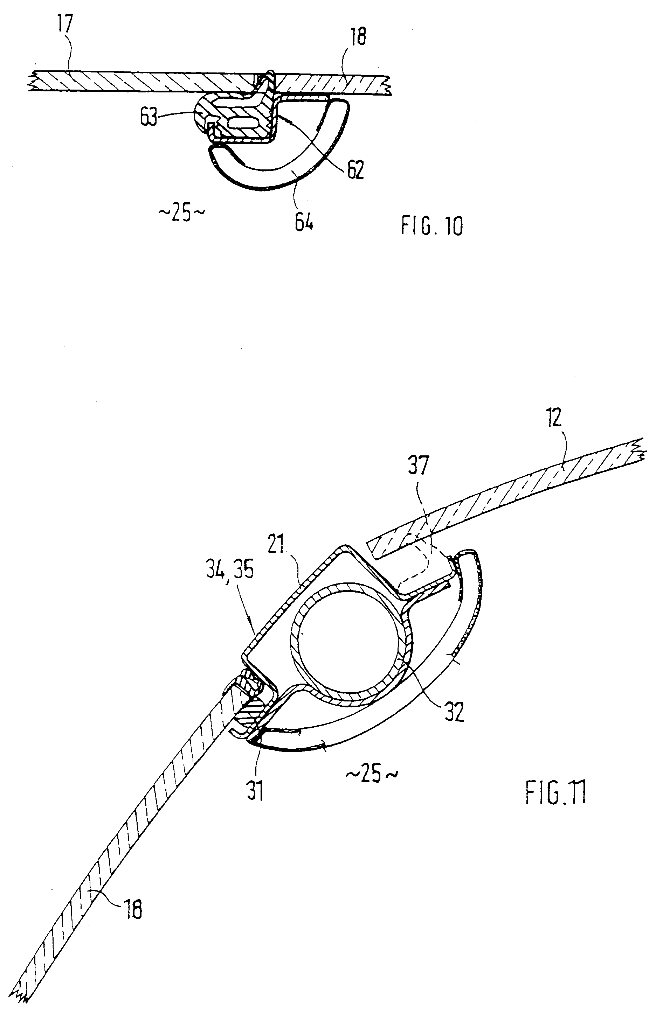

- Fig. 10: einen Schnitt nach der Linie X-X der Fig. 3 in größerem Maßstab,
- Fig. 11: einen Schnitt nach der Linie XI-XI der Fig. 2 in größerem Maßstab,
Der in den Fig. 1 bis 3 dargestellte umwandelbare Personenwagen 1 ist als zweisitziger Sportwagen ausgebildet und umfaßt eine strömungsgünstig ausgebildete Karosserie 2 mit einem Fließheck 3, hinteren Seitenteilen 4, seitlichen Türen 5, vorderen Seitenteilen 6, einen Bugbereich 7 mit einem Stoßfänger 8 und einer Bughaube 9, eine Windschutzscheibe 10, ein abnehmbares Verdeck 11, eine Heckscheibe 12 und Räder 13, 14.

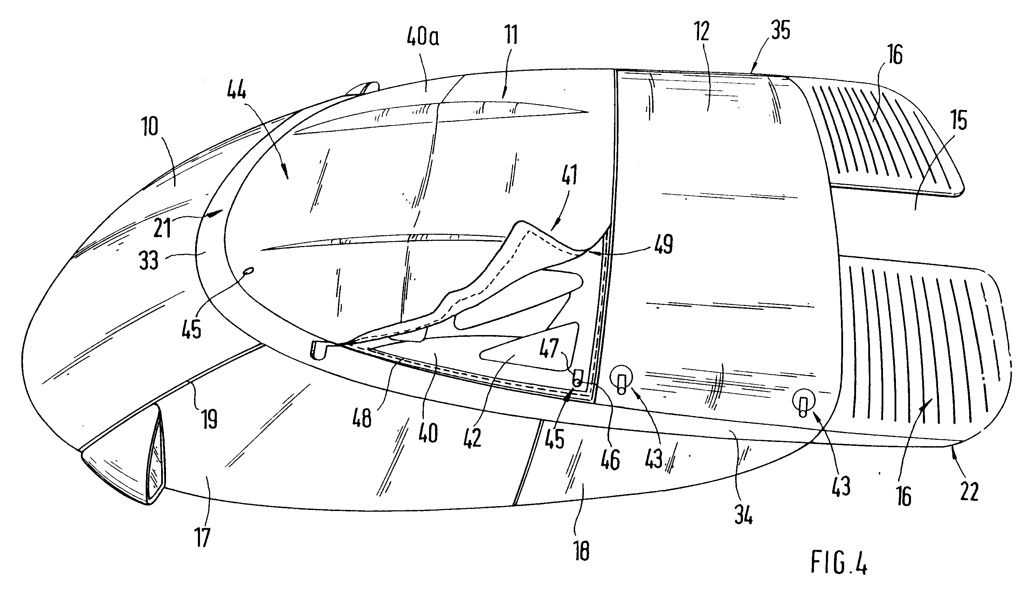

Das Fließheck 3 wird durch die relativ flach gewölbte Heckscheibe 12 und eine dahinterliegend angeordnete Motorhaube 15 gebildet, wobei an der Motorhaube 15 örtlich Kühllufteintrittsöffnungen 16 für einen nicht näher gezeigten luftgekühlten Heckmotor vorgesehen sind. Die Kühllufteintrittsöffnungen (16) können sich über die gesamte Breite der Motorhaube 15 erstrecken (Fig. 1 bis 3) oder aber nur in seitlich außenliegenden Bereichen der Motorhaube 15 angeordnet sein (Fig. 4).

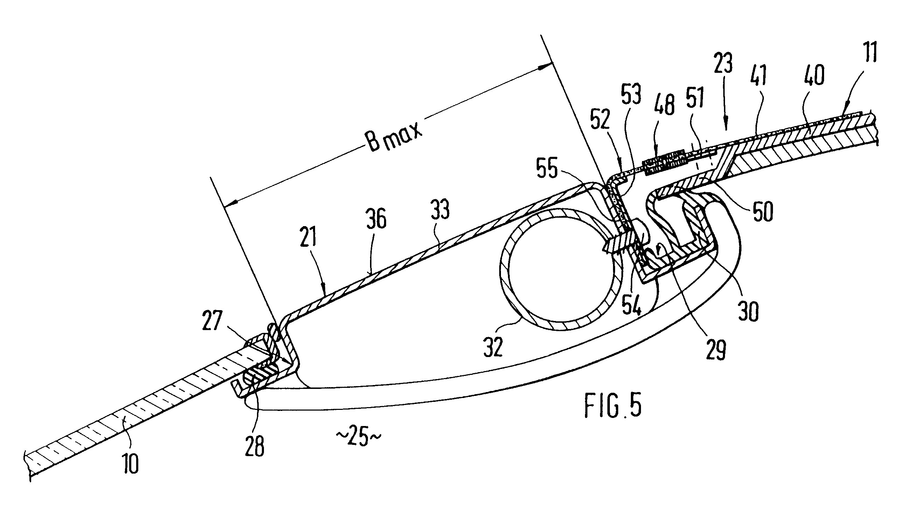

Die relativ flach angestellte, in Querrichtung gesehen seitlich stark gebogene Windschutzscheibe 10 ist an ihren beiden außenliegenden Längsseiten unter Bildung einer schmalen Fuge 19 außenhautbündig an die angrenzende Türfensterscheibe 17 herangeführt, wobei die Türfensterscheibe 17 in Höhenrichtung 10 verstellbar ist. Hinter den seitlichen Türen 5 verläuft jeweils angrenzend an die Türfensterscheibe 17 ein feststehendes Fondseitenfenster 18. Zur einfachen Aufnahme des Verdecks 11 und der Heckscheibe 12 weist der Personenkraftwagen 1 einen durchgehenden tragenden Rahmen 21 auf, der benachbart und entlang dem oberen Rand der Windschutzscheibe 10, der Türfensterscheiben 17 und der Fondseitenfenster 18 bzw. der Heckscheibe 12 verläuft, wobei der Rahmen 21 in der Draufsicht gesehen etwa U-förmig gebogen ist. Der Übergangsbereich zwischen den längsgerichteten seitlichen Schenkeln 34, 35 und dem querverlaufenden Abschnitt 33 des Rahmens 21, weist einen gerundeten Formverlauf auf. Der eine Tragstruktur bildende Rahmen 21 ist im Querschnitt etwa hutförmig profiliert (Fig. 5) und begrenzt eine Öffnung 23, die mittels der Heckscheibe 12 und dem abnehmbaren Verdeck 11 verschließbar ist.

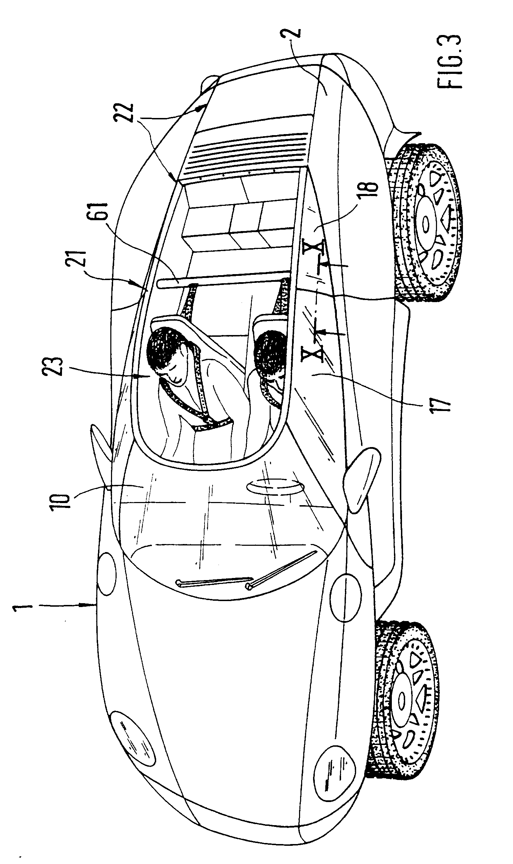

Gemäß Fig. 3 ist der Rahmen 21 an seinen freien hintenliegenden Enden 22 mit der angrenzenden Karosserie 2 verbunden. Im Ausführungsbeispiel sind die beiden freien Enden 22 des Rahmens 21 mit dem benachbarten Fondseitenteil der Karosserie 2 verschweißt (nicht dargestellt).

Im Verbindungsbereich der Windschutzscheibe 10 mit der Türfensterscheibe 17 ist innenliegend jeweils eine A-Säule 26 vorgesehen, die einerseits an den U-förmigen Rahmen 21 und andererseits an eine nicht näher dargestellte Scharniersäule angeschlossen ist. Die A-Säule 26 ist gemäß Fig. 7 U-förmig profiliert. Sie kann aber auch als kastenförmiger Hohlträger ausgebildet und mit einer dem Fahrgastraum 25 zugekehrten Verkleidung versehen sein. Die A-Säule 26 ist durch die beiden Sichtscheiben (Windschutzscheibe 10, Türseitenscheibe 17) nach außen hin völlig verkleidet.

Die Windschutzscheibe 10 ist einerseits am querverlaufenden Abschnitt 33 des Rahmens 21 und andererseits an beiden schrägverlaufenden A-Säulen 26 über eine Verklebung in Lage gehalten. Hierzu sind am Rahmen 21 und an den A-Säulen 26 jeweils rinnenförmige Aufnahmen 27 für einen Klebekörper 28 vorgesehen (Fig. 5 und 7). Ferner weist der Rahmen 21 entlang seiner U-förmigen Erstreckung auf der dem Verdeck 11 zugekehrten Seite eine rinnenförmige Aufnahme 29 auf, in die ein mit dem Verdeck 11 zusammenwirkender schlauchförmiger Dichtkörper 30 eingesetzt ist. Entlang der A-Säule 26 und eines anschließenden außenliegenden Teilbereiches des Rahmens 21 ist ein weiterer schlauchförmiger Dichtkörper 24 angeordnet, auf dem ein vorderer bzw. ein oberer Rand der Türfensterscheibe 17 unter Vorspannung aufliegt. Die Türfensterscheibe 17 ist oberhalb einer Gürtellinie 68 rahmenlos ausgebildet, d.h. es ist kein feststehender Türrahmen vorgesehen.

Das Fondseitenfenster 18 ist abschnittsweise ebenfalls mit dem Rahmen 21 verklebt (Klebekörper 31; Fig. 11). Der Rahmen 21 kann aus Kunststoff, Aluminiumblech, Stahlblech oder dergleichen hergestellt sein. Gemäß Fig. 5 ist der Rahmen 21 aus Kunststoff gefertigt, wobei aus Versteifungsgründen innerhalb des Hutprofils zusätzlich ein Rohr 32 vorgesehen ist, das zum Fahrgastraum 25 hin durch eine Verkleidung abgedeckt ist. Der Rahmen 21 könnte auch als kastenförmiger Hohlträger, als Rohr oder dergleichen ausgebildet sein.

Ein querverlaufender vorderer Abschnitt 33 des Rahmens 21 verläuft etwa horizontal ausgerichtet am oberen Rand der Windschutzscheibe 10, wogegen die seitlichen Schenkel 34, 35 des Rahmens 21 ebenso wie die benachbarten Sichtscheiben (Türfensterscheibe 17, Fondseitenfenster 18) schräg nach unten hin zum Fließheck 3 gerichtet sind, dergestalt, daß der Rahmen 21 im seitlichen Bereich etwa in Fortsetzung der Fließheckkontur zum oberen Rand der Windschutzscheibe 10 verläuft.

Die Windschutzscheibe 10, die Türfensterscheibe 17 und die Fondseitenfenster 18 umgeben dem Fahrgastraum 25 oberhalb der Gürtellinie 68 kragenförmig, wobei sich die Türfensterscheiben 17 und die Fondseitenfenster 18 zur Motorhaube 15 hin keilförmig verjüngen und die Fondseitenfenster 18 etwa an der hinteren Begrenzungskante der Heckscheibe 12 spitz auslaufen.

Der außenhautbündig verlaufende sichtbare Abschnitt 36 des hutprofilförmigen Rahmens 21 weist eine sich kontinuierlich verändernde Breite auf. Die Breite des Abschnitts 36 nimmt vom Heck nach vorne hin ständig zu und weist am oberen Rand der Windschutzscheibe 10 in einer Längsmittelebene A-A des Personenkraftwagens seine größte Erstreckung (Bmax) auf (Fig. 5).

Die Türfensterscheiben 17 und die Fondseitenfenster 18 sind oberhalb der Gürtellinie mit einem nach innen gerichteten Einzug versehen (Fig. 3).

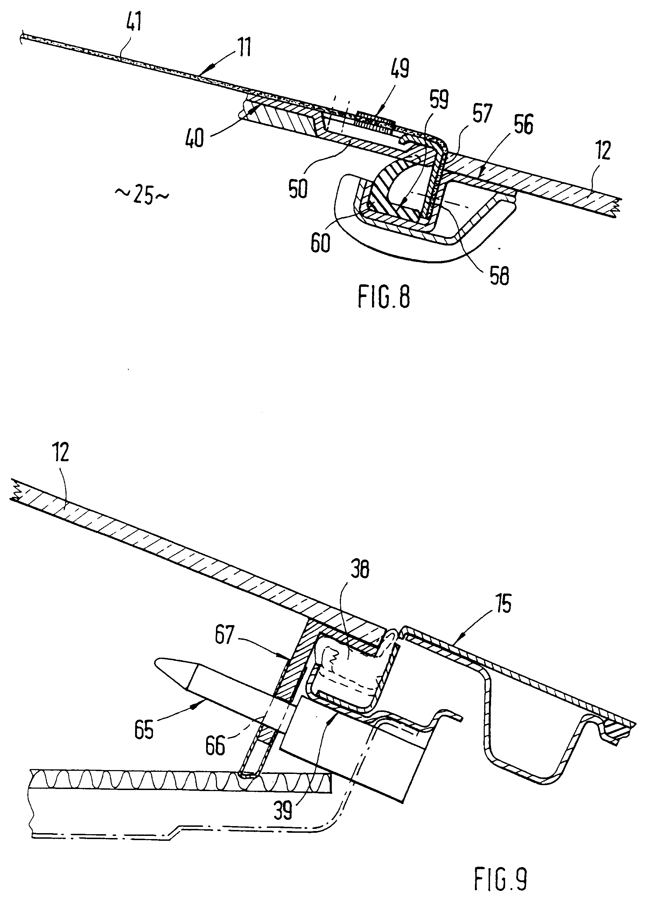

Die an die Motorhaube 15 anschließende Heckscheibe 12 liegt unter Vermittlung eines lippenförmigen Dichtkörpers 37 auf den beiden längsgerichteten Schenkeln 34, 35 des Rahmens 21 auf (Fig. 11) und ist mittels nicht näher dargestellter lösbarer Verbindungselemente (Schnellverschlüsse) bei 43 am Rahmen 21 in Lage gehalten. Ein unterer Rand der Heckscheibe 12 wirkt mit einem Dichtkörper 38 zusammen, der an einem aufbauseitig feststehenden Querträger 39 vorgesehen ist. Der Querträger 39 ist im Verbindungsbereich Motorhaube-Heckscheibe angeordnet. Zur Fixierung der Heckscheibe 12 sind an der Unterseite des Querträgers örtlich Zapfen 65 vorgesehen, die mit Öffnungen 66 von winkelförmigen (Fig. 9) Laschen 67 zusammenwirken. Die Laschen 67 sind randseitig an der Heckscheibe 12 angebracht.

Die Heckscheibe 12 kann aus Glas oder aus Gewichtsgründen aus Polymethylmethacrylat (PMMA; Plexiglas) hergestellt sein, wobei bei der abnehmbaren Ausführung PMMA vorzuziehen ist. Das in Fahrtrichtung B gesehen vor der Heckscheibe 12 liegende abnehmbare Verdeck 11 besteht aus wenigstens einer innenliegenden, am Rahmen 21 örtlich abgestützten Schale 40, die außenseitig von einem textilen Bezug 41 verkleidet ist. Gemäß Fig. 4 sind zwei Schalen 40, 40a vorgesehen, die sich oberhalb des Fahrer- bzw. Beifahrersitzes erstrecken, wogegen in einem zwischenliegenden Bereich 44 eine versteifungslose Zone geringer Breite vorgesehen ist. Die beiden Schalen 40, 40a können auch als Halbschalen ausgebildet sein, so daß der vor der Heckscheibe 12 liegende Abschnitt der Öffnung 23 vollständig abgedeckt ist. Die Schalen 40, 40a sind aus Stahlblech, Aluminiumblech, Kunststoff oder dergleichen hergestellt und gewährleisten einerseits die erforderliche Kopffreiheit und dienen andererseits als Auflage für den textilen Bezug 41. Gemäß Fig. 4 sind die Schalen 40, 40a örtlich mit Versteifungssicken 42 versehen. Die zweischalige Ausführung hat den Vorzug, daß sich die abgenommenen Schalen 40, 40a leichter im Fahrzeug verstauen lassen als eine einstückige Schale 40.

Zur Fixierung beider Schalen 40, 40a am Rahmen sind örtlich Arretiereinrichtungen 45 vorgesehen. Diese können beispielsweise dadurch gebildet werden, daß am Rahmen 21 örtlich nach oben hin gerichtete Zapfen 46 angebracht sind, die mit korrespondierenden Ausnehmungen 47 der Schalen 40, 40a zusammenwirken. Gemäß Fig. 8 erfolgt die Arretierung der Schale 40 dadurch, daß eine Abstellung 50 der Schale 40 bis zu einer Halteleiste 58 weiter geführt ist, wobei der Rand der Schale zwischen der Halteleiste 58 und einem darunterliegenden Dichtelement 60 eingeklemmt ist.

Der textile Bezug 41 besteht aus einem wasserundurchlässigen, spann- und dehnbaren Material wie Kunstleder oder dergleichen. Zur lösbaren Befestigung des Bezuges 41 ist zumindest ein Reißverschluß 48 vorgesehen.

Entsprechend Fig. 4 erstreckt sich ein erster Reißverschluß 48 entlang eines Teilbereiches der U-förmigen Erstreckung des Rahmens 21, wogegen ein zweiter Reißverschluß 49 im querverlaufenden Verbindungsbereich Heckscheibe - Bezug vorgesehen ist.

Die Schalen 40, 40a sind randseitig (zumindest vorne, seitlich und hinten) mit einer nach innen gerichteten stufenförmigen Abstellung 50 versehen, wobei die Abstellung 50 auf einem Dichtkörper 30 des Rahmens 21 aufliegt.

Die beiden Reißverschlüsse 48, 49 sind im Bereich der außenhautbündig verlaufenden Oberseite des Bezuges 41 und zwar benachbart dem Rahmen 21 bzw. der Heckscheibe 12 vorgesehen.

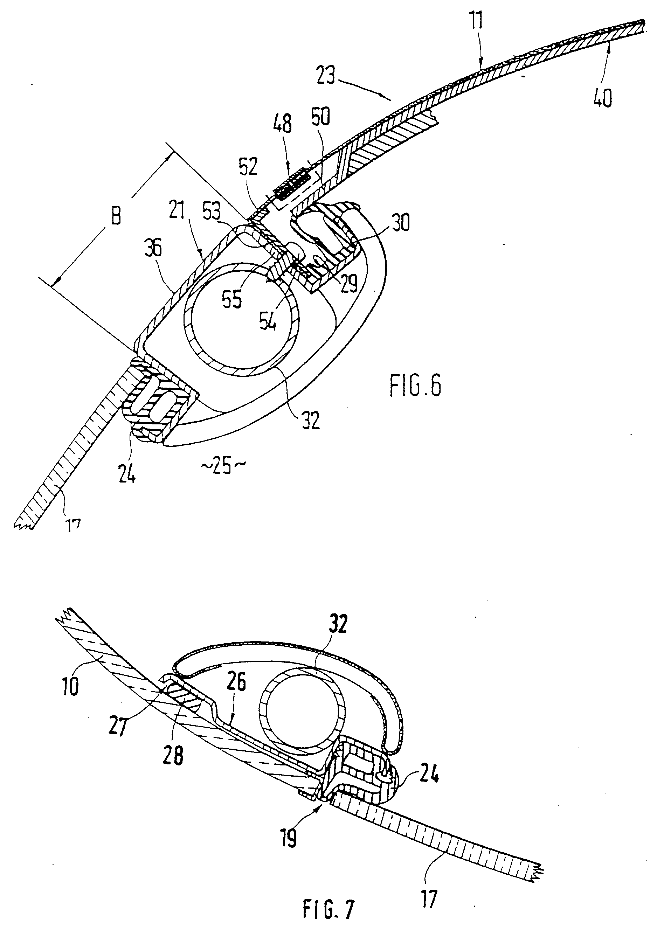

Ein erster Stoffstreifen 51 des Reißverschlusses 48 ist mit der Innenseite des textilen Bezuges 41 vernäht (Fig. 5), wogegen der zweite randseitige Stoffstreifen 52 mittels einer Halteschiene 53 und Befestigungsschrauben 54 an einem nach innen abgestellten Flansch 55 des Rahmens 21 befestigt ist (Fig. 5, 6).

Im Übergangsbereich Verdeck 11 - Heckscheibe 12 ist an der Innenseite der Heckscheibe 12 eine randseitige, querverlaufende profilierte Schiene 56 angeklebt, an der ein querverlaufender Stoffstreifen 57 des zweiten Reißverschlusses 49 mittels Befestigungsschrauben 54 und einer Halteleiste 58 festgelegt ist (Fig. 8). Die ständig an der Heckscheibe 12 verbleibende Schiene 56 überragt die Heckscheibe 12 in Richtung Verdeck 11 hin und weist einen rinnenförmigen Kanal 59 zur Aufnahme eines Dichtelementes 60 auf, das mit den Schalen 40, 40a zusammenwirkt.

Der textile Bezug 41 ist in Längs- und Querrichtung etwas kleiner als die durch den Rahmen 21 und die Heckscheibe 12 begrenzte Öffnung 23 so daß bei geschlossenem Verdeck 11 der Bezug 41 stets unter einer gewissen Vorspannung zum randseitigen Reißverschluß 48, 49 steht.

Aus Diebstahlsicherungsgründen sind bei beiden Reißverschlüssen 48, 49 in nicht näher gezeigter Weise die herkömmlichen Läufer zum Bewegen der Schieber entfernt. Anstelle der Läufer wird ein winkelförmig gebogenes Sonderwerkzeug verwendet, das bei Bedarf in die Öffnung der Schieber einsteckbar ist. Nach erfolgtem Schließen der Reißverschlüsse wird das Sonderwerkzeug aus dem Schieber abgezogen. Das Sonderwerkzeug wird beim Kauf des Fahrzeuges mit dem Fahrzeugschlüssel mitgeliefert.

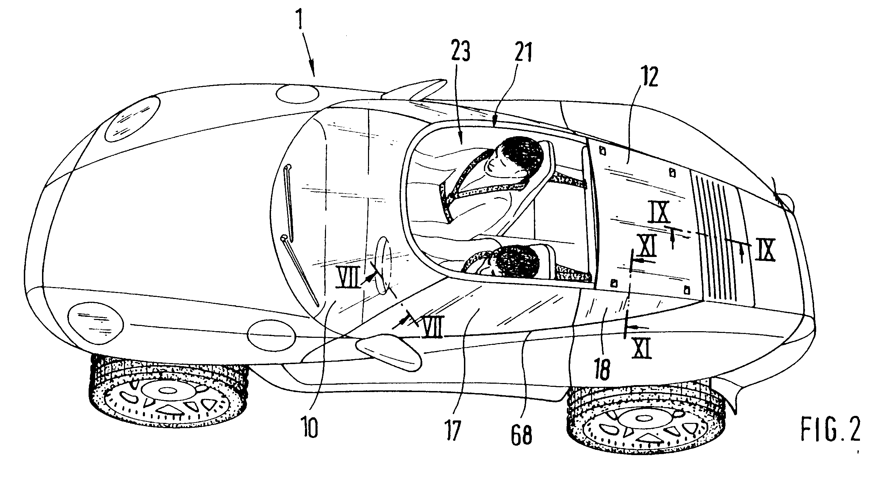

Fig. 1 zeigt den Personenkraftwagen mit geschlossenem Verdeck 11, wogegen in Fig. 2 das Verdeck 11 entfernt ist. In Fig. 3 ist sowohl das Verdeck 11 als auch die Heckscheibe 12 abgenommen. Ferner ist aus Fig. 3 ein Querrohr 61 hinter den Fahrer- bzw. Beifahrersitz ersichtlich, wobei dieses Querrohr 61 zur Befestigung der oberen Gurtpunkte eines Sicherheitsgurtsystems dient.

Im aufrechten Verbindungsbereich Türfensterscheibe 17 - Fondseitenfenster 18 ist an der Innenseite des Fondseitenfensters 18 eine profilierte Schiene 62 mit einem eingesetzten Dichtkörper 63 angebracht, wobei ein hinterer aufrechter Rand der Türfensterscheibe 17 unter Vorspannung an diesem Dichtkörper 63 anliegt (Fig. 6). Die Schiene 62 ist auf der dem Fahrgastraum 25 zugekehrten Seite mit einer Innenverkleidung 64 versehen. Zur Erhöhung der Steifigkeit kann die Schiene 62 sowohl mit dem Rahmen 21 als auch mit der darunterliegenden Karosserie fest verbunden sein (z.B. durch Schweißen, Schrauber und dgl.).

## Patentansprüche

1. Personenkraftwagen (1), insbesondere Sportwagen, mit einer strömungsgünstig ausgebildeten Karosserie (2), die oberhalb einer Gürtellinie (68) eine Windschutzscheibe (10), ein Verdeck (11), Türfensterscheiben (17), Fondseitenfenster (18) und eine Heckscheibe (12) umfaßt, wobei entlang dem oberen Rand der Windschutzscheibe (10), der Türfensterscheiben (17) und von dahinterliegend angeordneten Fondseitenfenstern (18) ein durchgehender, tragender Rahmen vorgesehen ist, an dem das Verdeck lösbar befestigt ist, **dadurch gekennzeichnet**, daß der eine Tragstruktur bildende Rahmen (21) in der Draufsicht gesehen etwa U-förmig ausgebildet ist und sich bis zu einem Heckbereich erstreckt, wobei die freien Enden (22) der seitlich außenliegenden Schenkel (34, 35) des Rahmens (21) dem Heck zugekehrt sind und daß am Rahmen (21) das Verdeck (11) und die Heckscheibe (12) unmittelbar hintereinanderliegend lösbar befestigt sind.

2. Personenkraftwagen nach Anspruch 1, **dadurch gekennzeichnet**, daß die beiden freien Enden (22) der seitlich außenliegenden Schenkel (34, 35) des Rahmens (21) karosserieseitig befestigt sind.

3. Personenkraftwagen nach Anspruch 1, **dadurch gekennzeichnet,** daß der Rahmen (21) im Querschnitt gesehen etwa hutförmig profiliert ist.

4. Personenkraftwagen nach Anspruch 1, **dadurch gekennzeichnet,** daß der Rahmen (21) rinnenförmige Aufnahmen (27, 29) für einen Klebekörper (28, 31) und/oder Dichtkörper (24, 30, 37) aufweist.

5. Personenkraftwagen nach Anspruch 1, **dadurch gekennzeichnet**, daß ein außenhautbündiger Abschnitt (36) des Rahmens (21) im Bereich einer Längsmittelebene A-A durch die Windschutzscheibe (10) seine größte Breite (Bmax) aufweist und daß sich diese Breite zu den Außenseiten bzw. zum Heck hin kontinuierlich verkleinert.

6. Personenkraftwagen nach den Ansprüchen 1 und 2, **dadurch gekennzeichnet**, daß die seitlichen Schenke (34, 35) des Rahmens (21) etwa in Verlängerung einer Fließheckkontur (3) des Personenewagens (1) nach vorne zum oberen Rand der Windschutzscheibe (10) hin verlaufen.

7. Personenkraftwagen nach Anspruch 1, **dadurch gekennzeichnet**, daß der Rahmen (21) in den Verbindungsbereichen Windschutzscheibe- Türfensterscheibe über innenliegend angeordnete A-Säulen (26) an der Karosserie (2) abgestützt ist.

8. Personenkraftwagen nach Anspruch 1, **dadurch gekennzeichnet**, daß die Windschutzscheibe (10), die Türfensterscheiben (17) und die Fondseitenfenster (18) einen Fahrgastraum (25) des Personenwagens (1) kragenförmig umgeben, wobei sich die seitlichen Sichtscheiben (Türfensterscheibe 17, Fondseitenfenster 18) zum Heck hin keilförmig verjüngen und spitz auslaufen.

9. Personenkraftwagen nach Anspruch 1, **dadurch gekennzeichnet,** daß die abnehmbare Heckscheibe (12) aus einem formsteifen Kunststoff (z.B. PMMA) hergestellt ist.

10. Personenkraftwagen nach Anspruch 1, **dadurch gekennzeichnet**, daß die Heckscheibe (12) über Schnellverschlüsse am Rahmen (21) in Lage gehalten ist.

11. Personenkraftwagen nach Anspruch 1, **dadurch gekennzeichnet** ,daß ein oberer Rand der Windschutzscheibe (10) und der beiden Fondseitenfenster (18) über Klebekörper (28, 31) fest mit dem Rahmen (21) verbunden sind.

12. Personenkraftwagen nach Anspruch 1, **dadurch gekennzeichnet**, daß das in Fahrtrichtung gesehen vor der Heckscheibe (12) liegende Verdeck (11) aus wenigstens einer innenliegenden, am Rahmen (21) abgestützten Schale (40, 40a) besteht, die außenseitig durch einen textilen Bezug (41) verkleidet ist.

13. Personenkraftwagen nach Anspruch 12, **dadurch gekennzeichnet,** daß vorzugsweise zwei Schalen (40, 40a) vorgesehen sind, wobei sich die eine oberhalb des Fahrersitzes und die andere oberhalb des Beifahrersitzes erstreckt, wogegen im dazwischenliegenden Bereich (44) eine versteifungslose Zone vor-gesehen ist.

14. Personenkraftwagen nach den Ansprüchen 12 und 13, **dadurch gekennzeichnet**, daß die Schalen (40, 40a) über Arretiereinrichtungen (45) am Rahmen (21) festgelegt sind.

15. Personenkraftwagen nach Anspruch 12, **dadurch gekennzeichnet**, daß der textile Bezug (41) aus einem wasserundurchlässigen, spann- und dehnbaren Material hergestellt ist.

16. Personenkraftwagen nach Anspruch 15, **dadurch gekennzeichnet**, daß der textile Bezug (41) aus Kunstleder besteht.

17. Personenkraftwagen nach den Ansprüchen 12,15 und 16, **dadurch gekennzeichnet**, daß zur lösbaren Befestigung des textilen Bezuges (41) am Rahmen (21) bzw. an der Heckscheibe (12) zumindest ein Reißverschluß (48, 49) vorgesehen ist.

18. Personenkraftwagen nach Anspruch 17, **dadurch gekennzeichnet**, daß entlang der U-förmigen Erstreckung des Rahmens (21) ein erster Reißverschluß (48) verläuft und daß im querverlaufenden Verbindungsbereich zwischen Bezug (41) und Heckscheibe (12) ein zweiter Reißverschluß (49) vorgesehen ist.

19. Personenkraftwagen nach den Ansprüchen 12, 15 und 16, **dadurch gekennzeichnet**, daß die Schalen (40, 40a) im Verbindungsbereich zum Rahmen (21) mit einer nach unten hin ragenden Abstellung (50) versehen sind, wobei die Abstellung (50) auf einem Dichtkörper (30) des Rahmens (21) aufliegt.

20. Personenkraftwagen nach Anspruch 1, **dadurch gekennzeichnet,** daß der Rahmen (21) im Verbindungsbereich Türfensterscheibe - Fondseitenfenster über eine innenliegende profilierte Schiene (62) an der Karosserie (2) abgestützt ist.

21. Personenkraftwagen nach Anspruch 1, **dadurch gekennzeichnet,** daß am hinteren Rand der Heckscheibe (12) zumindest örtlich abgewinkelte Laschen (67) vorgesehen sind, die zur Arretierung der Heckscheibe mit aufbauseitigen Zap-fen (65) zusammenwirken.

## Claims

1. A passenger car (1), in particular a sports car, having a streamlined bodywork (2) comprising above a waist line (68) a windscreen (10), a top (11), door windows (17), rear side windows (18) and a rear window (12), wherein a continuous supporting frame, to which the top is detachably secured, is provided along the upper edge of the windscreen (10), the door windows (17) and rear side windows (18) arranged therebehind, **characterized in that** the frame (21) forming the support structure is made substantially U-shaped as seen in plan view and extends as far as a tail region, wherein the free ends (22) of the arms (34, 35) of the frame (21) lying laterally on the outside are turned towards the tail, and the top (11) and the rear window (12) are detachably secured to the frame (21) one immediately behind the other.

2. A passenger car according to Claim 1, **characterized in that** the two free ends (22) of the arms (34, 35) of the frame (21) lying laterally on the outside are secured to the bodywork.

3. A passenger car according to Claim 1, **characterized in that** as viewed in cross-section the frame (21) is substantially hat-shaped in profile.

4. A passenger car according to Claim 1, **characterized in that** the frame (21) has channel-shaped receiving means (27, 29) for an adhesive member (28, 31) and/or sealing member (24, 30, 37).

5. A passenger car according to Claim 1, **characterized in that** a portion (36) of the frame (21) flush with the outer skin has its maximum width (Bₘₐₓ) in the region of a longitudinal median plane A-A through the windscreen (10), and this width is continuously reduced towards the outer sides and towards the tail.

6. A passenger car according to Claims 1 and 2, **characterized in that** the lateral arms (34, 35) of the frame (21) extend forwards towards the upper edge of the windscreen (10) in the manner of an extension of a fastback profile (3) of the passenger car (1).

7. A passenger car according to Claim 1, **characterized in that** the frame (21) is supported on the bodywork (2) by way of A-columns (26) arranged on the inside in the connexion areas between the windscreen and the door window.

8. A passenger car according to Claim 1, **characterized in that** the windscreen (10), the door windows (17) and the rear side windows (18) surround a passenger compartment (25) of the passenger car (1) in the manner of a collar, wherein the lateral windows (door window 17, rear side window 18) taper towards the tail in the shape of a wedge and terminate in a point.

9. A passenger car according to Claim 1, **characterized in that** the removable rear window (12) is produced from a dimensionally stable plastics material (for example PMMA).

10. A passenger car according to Claim 1, **characterized in that** the rear window (12) is held in position on the frame (21) by way of quick-action fasteners.

11. A passenger car according to Claim 1, **characterized in that** an upper edge of the windscreen (10) and the two rear side windows (18) are connected securely to the frame (21) by way of adhesive members (28, 31).

12. A passenger car according to Claim 1, **characterized in that** the top (11) situated in front of the rear window (12) as viewed in the direction of travel comprises at least one internal shell (40, 40a) supported on the frame (21) and coated with a textile cover (41) on the outside.

13. A passenger car according to Claim 12, **characterized in that** two shells (40, 40a) are preferably provided, one of which extends above the driver's seat and the other above the front passenger's seat, whereas a reinforcement-free area is provided in the intermediate area (44).

14. A passenger car according to Claims 12 and 13, **characterized in that** the shells (40, 40a) are secured to the frame (21) by way of locking devices (45).

15. A passenger car according to Claim 12, **characterized in that** the textile covering (41) is produced from a water-impermeable, tensible and expansible material.

16. A passenger car according to Claim 15, **characterized in that** the textile covering (41) consists of artificial leather.

17. A passenger car according to Claims 12, 15 and 16, **characterized in that** at least one zip fastener (48, 49) is provided on the frame (21) or on the rear window (12) for detachably fastening the textile covering (41).

18. A passenger car according to Claim 17, **characterized in that** a first zip fastener (48) extends along the U-shaped extension of the frame (21), and a second zip fastener (49) is provided in the transversely extending connexion area between the covering (41) and the rear window (12).

19. A passenger car according to Claims 12, 15 and 16, **characterized in that** the shells (40, 40a) are provided with a downwardly extending projection (50) in the connexion area to the frame (21), the projection (50) resting on a sealing member (30) of the frame (21).

20. A passenger car according to Claim 1, **characterized in that** the frame (21) is supported on the bodywork (2) by way of an internally profiled rail (62) in the connexion area between the door window and the rear side window.

21. A passenger car according to Claim 1, **characterized in that** angled straps (67) cooperating with pins (65) on the body for locking the rear window (12) are provided at least locally on the rear edge of the rear window.

## Revendications

1. Voiture de tourisme (1), en particulier voiture de sport, présentant une carrosserie (2) aérodynamique qui comporte, au-dessus d'une ligne médiane (68), un pare-brise (10), une capote (11), des vitres de portières (17), des fenêtres latérales arrière (18) et une vitre arrière (12), un cadre porteur, continu, sur lequel la capote est fixée amovible, étant prévu le long du bord supérieur du pare-brise (10), des vitres de portières (17) et des fenêtres latérales arrière (18) situées derrière celles-ci, caractérisée en ce que le cadre (21), formant une structure portante, est à peu près en U vu de dessus et s'étend jusqu'à une zone arrière, les extrémités libres (22) des côtés (34, 35) extérieurs du cadre (21) étant tournées vers l'arrière et en ce que sur le cadre (21) sont fixées amovibles, directement l'une derrière l'autre, la capote (11) et la vitre arrière (12).

2. Voiture de tourisme selon la revendication 1, caractérisée en ce que les deux extrémités libres (22) des côtés (34, 35) extérieurs du cadre (21) sont fixées côté carrosserie.

3. Voiture de tourisme selon la revendication 1, caractérisée en ce que le cadre (21) a une section transversale profilée à peu près en forme de chapeau.

4. Voiture de tourisme selon la revendication 1, caractérisée en ce que le cadre (21) comporte des logements (27, 29) en forme de gorges pour un corps adhésif (28, 31) et/ou des corps d'étanchéité (24, 30, 37).

5. Voiture de tourisme selon la revendication 1, caractérisée en ce qu'une partie (36) du cadre (21), alignée avec le revêtement extérieur, présente dans la zone d'un plan médian longitudinal (A-A) passant par le pare-brise (10), sa plus grande largeur (Bmax) et en ce que cette largeur diminue en continu vers les côtés extérieurs ou vers l'arrière.

6. Voiture de tourisme selon les revendications 1 et 2, caractérisée en ce que les côtés (34, 35) du cadre (21) s'étendent à peu près dans le prolongement d'un contour arrière (3) de la voiture de tourisme (1) vers l'avant, jusqu'au bord supérieur du pare-brise (10).

7. Voiture de tourisme selon la revendication 1, caractérisée en ce que le cadre (21) prend appui contre la carrosserie (2) dans les zones de liaison entre le pare-brise et la vitre de portière, par des montants A (26) situés à l'intérieur.

8. Voiture de tourisme selon la revendication 1, caractérisée en ce que le pare-brise (10), les vitres de portière (17) et les fenêtres latérales arrière (18) entourent à la manière d'un col un habitacle (25) de la voiture de tourisme (1), les vitres latérales (vitre de portière 17, fenêtre latérale arrière 18) se rétrécissant en forme de coin vers l'arrière et se terminant en pointe.

9. Voiture de tourisme selon la revendication 1, caractérisée en ce que la vitre arrière (12) amovible est réalisée dans une matière plastique rigide (par exemple PMMA).

10. Voiture de tourisme selon la revendication 1, caractérisée en ce que la vitre arrière (12) est maintenue en position sur le cadre (21), par des fermetures rapides.

11. Voiture de tourisme selon la revendication 1, caractérisée en ce qu'un bord supérieur du pare-brise (10) et les deux fenêtres latérales arrière (18) sont assemblés de manière fixe avec le cadre (21), par des corps adhésifs (28, 31).

12. Voiture de tourisme selon la revendication 1, caractérisée en ce que la capote (11) située devant la vitre arrière (12), vue dans le sens de la marche, est constituée par au moins une coque (40, 40a) intérieure, prenant appui contre le cadre (21), qui est recouverte à l'extérieur par un revêtement textile (41).

13. Voiture de tourisme selon la revendication 12, caractérisée en ce qu'il est prévu de préférence deux coques (40, 40a), l'une s'étendant au-dessus du siège du conducteur et l'autre au-dessus du siège du passager, tandis que dans la région (44) située entre les deux, il est prévu une zone sans raidisseur.

14. Voiture de tourisme selon les revendications 12 et 13, caractérisée en ce que les coques (40, 40a) sont fixées sur le cadre (21) par des dispositifs de blocage (45).

15. Voiture de tourisme selon la revendication 12, caractérisée en ce que le revêtement textile (41) est réalisé dans un matériau imperméable à l'eau, pouvant être tendu et étiré.

16. Voiture de tourisme selon la revendication 15, caractérisée en ce que le revêtement textile (41) est en cuir synthétique.

17. Voiture de tourisme selon les revendications 12, 15 et 16, caractérisée en ce que pour la fixation amovible du revêtement textile (41) sur le cadre (21) ou sur la vitre arrière (12) il est prévu au moins une fermeture à glissière (48, 49).

18. Voiture de tourisme selon la revendication 17, caractérisée en ce que le long de l'extension en U du cadre (21) s'étend une première fermeture à glissière (48) et en ce que dans la zone de liaison transversale, entre le revêtement (41) et la vitre arrière (12), il est prévu une seconde fermeture à glissière (49).

19. Voiture de tourisme selon les revendications 12, 15 et 16, caractérisée en ce que les coques (40, 40a) sont prévues dans la zone de liaison avec le cadre (21), avec un décrochement (50) dépassant vers le bas, le décrochement (50) reposant sur un corps d'étanchéité (30) du cadre (21).

20. Voiture de tourisme selon la revendication 1, caractérisée en ce que le cadre (21) prend appui contre la carrosserie (2), dans la zone de liaison entre la vitre de portière et la fenêtre latérale arrière, par l'intermédiaire d'un rail (62) profilé, situé à l'intérieur.

21. Voiture de tourisme selon la revendication 1, caractérisée en ce que sur le bord arrière de la vitre arrière (12) sont prévues des pattes (67) coudées au moins localement, qui coopèrent avec des tenons (65) côté carrosserie, pour bloquer la vitre arrière.
